# EUROPÄISCHE PATENTANMELDUNG

(11) **EP 2 151 739 A2**
(43) Veröffentlichungstag der Anmeldung: **10.02.2010**
(21) Anmeldenummer: 09100367.3
(22) Anmeldetag: 30.07.2009
(51) Int. Cl.: G06F 3/02, G06F 1/16

(54) **Anzeige- und Bedienvorrichtung**

(30) Priorität: 07.08.2008 DE 102008036754
(71) Anmelder: Inter Control Hermann Köhler GmbH & Co. KG, 90411 Nürnberg (DE)
(72) Erfinder: Wolf, Roland, 91217, Hersbruck (DE); Pohlmann, Dr. Thomas, 35396, Gießen (DE)
(74) Vertreter: Pätzold, Herbert

(57) **Zusammenfassung**

Die vorliegende Erfindung betrifft eine Anzeige- und Bedienvorrichtung mit einem Gehäuse, in dem ein LCD-Display mit vorbestimmten Abmessungen in X und Y - Richtung einer X, Y - Ebene eingeordnet ist und das mit einem oberen Rahmen abgeschlossen ist, wobei das LCD-Display eine Active-Area umfasst, die von einem Randbereich des LCD-Displays umgeben ist, der jeweils zumindest in einer Richtung X, Y unterschiedliche Abmessungen hat, wobei der obere Rahmen oberhalb des Displays parallel zu der X,Y- Ebene angeordnet ist und in X - Richtung und Y - Richtung jeweils eine identische Breite hat, und wobei das Gehäuse und der Rahmen derart ausgebildet sind, dass der Rahmen den gesamten Randbereich des LCD-Displays abdeckt und außerdem das Gehäuse abdeckt und außerdem die Active-Area des Displays innerhalb des Rahmens erkennbar ist. Eine erfindungsgemäße Anzeige- und Bedienvorrichtung umfasst außerdem einen Touchscreen mit vorgegebenen Abmessungen in X - Richtung und Y - Richtung, der oberhalb dem LCD-Display angeordnet ist und ebenfalls von dem Rahmen abgedeckt ist, wobei der Touchscreen eine Active-Area umfasst, die von einem Randbereich des Touchscreens umgeben ist, der jeweils zumindest in einer Richtung X,Y unterschiedliche Abmessungen hat, wobei der Touchscreen derart in dem Gehäuse oberhalb des LCD-Displays angeordnet ist, dass der Rahmen den gesamten Randbereich des Touchscreens abdeckt und außerdem die Active-Area des Touchscreens innerhalb des Rahmens bedienbar ist.

## Beschreibung

Die vorliegende Erfindung bezieht sich auf eine Anzeige- und Bedienvorrichtung und insbesondere auf eine Anzeige- und Bedienvorrichtung für den mobilen Arbeitsbereich.

Herkömmliche Anzeige- und Bedienvorrichtungen sind beispielsweise aus der EP 1 291 229 A2 bekannt, wobei die herkömmlichen Anzeige- und Bedienvorrichtungen üblicherweise ein Display, einen Touchscreen und insbesondere vorteilhaft auch taktil wahrnehmbare Steuertasten umfassen können.

Bei der Konstruktion einer Anzeige- und Bedienvorrichtung haben ein verwendetes Display und/oder ein verwendeter Touchscreen konstruktionsbedingt zu ihrer Active-Area einer unsymmetrische Außenkontur, was auch auf dem Platzbedarf für Zuleitungen, Verdrahtungen, Layout und Backlight beruht. Die beiden Bauteile Display und Touchscreen werden gewöhnlich möglichst nahe zueinander plaziert und mechanisch in einer Rahmenkonstruktion, die Teil des Gehäuses der Anzeige-und Bedienvorrichtung ist, gelagert und befestigt, wobei wie oben erwähnt konstruktionsbedingt ein unsymmetrischer Rahmen zur Abdeckung des Gehäuses bei Minimierung des benötigten Platzbereichs entsteht, was ästhetisch und funktional nachteilhaft ist.

Für viele Einsatzbereiche ist es wünschenswert, neben einem Touchscreen zusätzliche Bedien- und Steuertasten außerhalb des Touchscreens und/oder des Displays vorzusehen, wobei die zusätzlichen Bedien- und/oder Steuertasten insbesondere für Anzeige- und Bedienvorrichtungen im mobilen Bereich wünschenswert taktil wahrnehmbar ausgebildet sein sollten.

Aufgrund der vorstehen beschriebenen Unsymmetrie des Rahmens aufgrund der Ausbildungen der jeweiligen Active-Area und aufgrund des unterschiedlichen seitlichen Platzbedarfs für Zuleitungen, Verdrahtungen, Layout und Backlight zum Display und/ oder zum Touchscreen können nun bei einer derartigen herkömmlichen Anzeige- und Bedienvorrichtung für ein herkömmliches Gehäuse nicht an allen Seiten des Rahmens Steuertasten gleicher Bauart mit an den Rahmen angepassten Abmessungen angeordnet werden, die insbesondere gleiche Abmessungen haben, und die der Anzeige- und Bedienvorrichtung einen geschmacklichen ästhetischen Gesamteindruck verleihen.

Auch ein Ausgleich der beim Stand der Technik vorhandenen Unsymmetrie des Rahmens und des Gehäuses durch Verbreiterung der jeweils schmäleren Seiten des Rahmens ist nachteilhaft, nachdem hierdurch die Anzeige- und Bedienvorrichtung unnötig vergrößert wird, was insbesondere im mobilen Arbeitsbereich nicht wünschenswert ist.

Aufgabe der vorliegenden Erfindung ist daher ein Gehäuse mit einem Rahmen für eine Anzeige- und Bedienvorrichtung vorzusehen, die symmetrisch aufgebaut sind, platzsparend ausgebildet sind und eine flexible ästhetische und funktionale Anordnung und Ausbildung von Bedien- und/oder Steuertasten ermöglichen, die insbesondere taktil ausgebildet sein können, und die innerhalb des Rahmens auf ästhetische Weise flexibel vorgesehen werden können.

Die Aufgabe wird mit den Merkmalen des unabhängigen Anspruchs gelöst. Vorteilhafte Ausführungen der vorliegenden Erfindung werden nachfolgend unter Bezugnahme auf die begleitenden Zeichnungen beschrieben. Hierzu zeigt:
- Fig. 1a: eine schematische Darstellung einer Draufsicht auf eine erfindungsgemäße Anzeige- und Bedienvorrichtung,
- Fig.1b: die Anzeige- und Bedienvorrichtung von Fig. 1a von hinten,
- Fig. 1c: die Anzeige- und Bedienvorrichtung von Fig. 1a von der Seite aus X-Richtung von Fig. 1 und
- Fig. 1d: eine weitere Seitenansicht der Anzeige- und Bedienvorrichtung von Fig. 1a aus Y- Richtung von Fig. 1;
- Fig. 2a: eine schematische Darstellung eines Touchscreens der erfindungsgemäßen Anzeige- und Bedienvorrichtung von Fig. 1 und
- Fig. 2b: eine schematische Darstellung eines LCD-Displays der Anzeige- und Bedienvorrichtung von Fig. 1a;
- Fig. 3a: eine schematische Darstellung eines Schnittes durch die Anzeigeund Bedienvorrichtung von Fig. 1a entlang der Linie Y-Y von Fig. 1a und
- Fig. 3b: eine schematische Darstellung eines Schnittes durch die Anzeigeund Bedienvorrichtung von Fig. 1b entlang der Linie X-X von Fig. 1b;
- Fig. 4a: eine vergrößerte Teilansicht der Anzeige- und Bedienvorrichtung von Fig. 3b und
- Fig. 4b: eine weitere Darstellung einer vergrößerten Teilansicht der Anzeige- und Bedienvorrichtung von Fig. 3b.
- Fig. 5a: ein vergrößerte Teilansicht der Anzeige- und Bedienvorrichtung von Fig. 3b und
- Fig. 5b: eine weitere vergrößerte Teilansicht Anzeige- und Bedienvorrichtung von Fig. 3a;
- Fig. 6a und b: Draufsichten auf weitere Ausführungen einer erfindungsgemäßen Anzeige- und Bedienvorrichtung und
- Fig. 7a und b: weitere abgewandelte Ausführungen einer erfindungsgemäßen Anzeige- und Bedienvorrichtung.

Die vorliegende Erfindung betrifft insbesondere eine Anzeige- und Bedienvorrichtung mit einem Gehäuse, in dem ein LCD-Display mit vorbestimmten Abmessungen in X und Y - Richtung einer X, Y - Ebene eingeordnet ist und das mit einem oberen Rahmen abgeschlossen ist, wobei das LCD-Display eine Active-Area umfasst, die von einem Randbereich des LCD-Displays umgeben ist, der jeweils zumindest in einer Richtung X, Y unterschiedliche Abmessungen hat, wobei der obere Rahmen oberhalb des Displays parallel zu der X,Y- Ebene angeordnet ist und in X - Richtung und Y - Richtung jeweils eine identische Breite hat, und wobei das Gehäuse und der Rahmen derart ausgebildet sind, dass der Rahmen den gesamten Randbereich des LCD-Displays abdeckt und außerdem das Gehäuse abdeckt und außerdem die Active-Area des Displays innerhalb des Rahmens erkennbar ist.

Eine erfindungsgemäße Anzeige- und Bedienvorrichtung umfasst außerdem insbesondere einen Touchscreen mit vorgegebenen Abmessungen in X - Richtung und Y - Richtung, der oberhalb dem LCD-Display angeordnet ist und ebenfalls von dem Rahmen abgedeckt ist, wobei der Touchscreen eine Active-Area umfasst, die von einem Randbereich des Touchscreens umgeben ist, der jeweils zumindest in einer Richtung X,Y unterschiedliche Abmessungen hat, wobei der Touchscreen insbesondere vorteilhaft derart in dem Gehäuse oberhalb des LCD-Displays angeordnet ist, dass der Rahmen den gesamten Randbereich des Touchscreens abdeckt und außerdem die Active-Area des Touchscreens innerhalb des Rahmens bedienbar ist.

Eineerfindungsgemäße Anzeige- und Bedienvorrichtung ist insbesondere vorteilhaft derart ausgebildet, dass ein vorstehend genanntes LCD-Display und ein vorstehend genannter Touchscreen unterschiedliche Abmessungen haben können, wobei außerdem insbesondere unterschiedliche Abmessungen des Randbereichs des LCD-Displays in wenigstens einer Richtung der X,Y - Ebene und außerdem unterschiedliche Abmessungen des Randbereichs des Touchscreens in wenigstens einer Richtung der X,Y- Ebene verschieden sein können, und das LCD-Display und der Touchscreen aufgrund der erfindungsgemäßen Ausbildung des Randbereichs und des Gehäuses in dem Gehäuse angeordnet werden können, ohne eine Symmetrie des Gehäuses und des Rahmens des Gehäuses zu beeinträchtigen.

Insbesondere für einen mobilen Arbeitseinsatz umfasst eine erfindungsgemäße Anzeige- und Bedienvorrichtung insbesondere in dem symmetrisch ausgebildeten Rahmen angeordnete taktile Bedien- und/oder Steuertasten und/oder Kennzeichnungen und/oder eine Abdeckfolie. Hierbei sind erfindungsgemäß insbesondere zumindest die Bedien- und Steuertasten und/oder die Abdeckfolie in jeweils X und/oder Y - Richtung mit gleichen Abmessungen ausgebildet.

Eine erfindungsgemäße Anzeige- und Bedienvorrichtung ist außerdem insbesondere derart ausgebildet, dass die in dem Rahmen angeordneten Bedien-und/oder Steuertasten und/oder Kennzeichnungen und/oder die Abdeckfolie den in dem Gehäuse angeordneten Touchscreen in X-Richtung um einen ersten und zweiten Betrag abdecken und außerdem in Y-Richtung um einen ersten und zweiten Betrag abdecken, wobei sich die ersten und zweiten Abdeckbeträge in X- und Y-Richtung jeweils vorteilhaft unterscheiden können, so dass eine Symmetrie von Rahmen/Gehäuse und Touchscreen/Display bereitgestellt ist.

Die vorstehend genannte geometrische Ausbildung ist besonders vorteilhaft, nachdem auf einfache Weise eine Vielzahl verschiedener Ausbildungen einer erfindungsgemäßen Anzeige- und Bedienvorrichtung für unterschiedliche Anwendungen mit einer unterschiedlichen Anzahl von Bedien- und/oder Steuertasten an dem Rahmen auf modulare Weise bereitgestellt und flexibel angeordnet werden können.

Eine erfindungsgemäße Anzeige- und Bedienvorrichtung umfasst außerdem vorteilhaft insbesondere ein Gehäuse und einen Rahmen, die derart ausgebildet sind, dass hinreichend Platz innerhalb des Gehäuses für Anschlüsse von Leitungen von einer Leiterplatte mit Steuerelementen zu dem Display und/oder dem Touchscreen bereitgestellt ist, ohne dass die erfindungsgemäße symmetrische Bauweise und Anordnung des Rahmens beeinträchtigt ist.

Insbesondere für die Anwendung und für den Einsatz im mobilen Arbeitsbereich ist ein erfindungsgemäßes Display vorteilhaft derart ausgebildet, dass es drahtlos und insbesondere über WLAN ansteuerbar ist und/oder Signale übermitteln kann.

Außerdem ist eine erfindungsgemäße Anzeige- und Bedienvorrichtung insbesondere für den mobilen Arbeitsbereich geeigneter Weise im Bereich etwa eines 12 Zoll Displays ausgebildet.

Die vorliegende Erfindung wird nachfolgend unter Bezugnahme auf die begleitenden schematischen Zeichnungen beispielhaft und detailliert beschrieben.

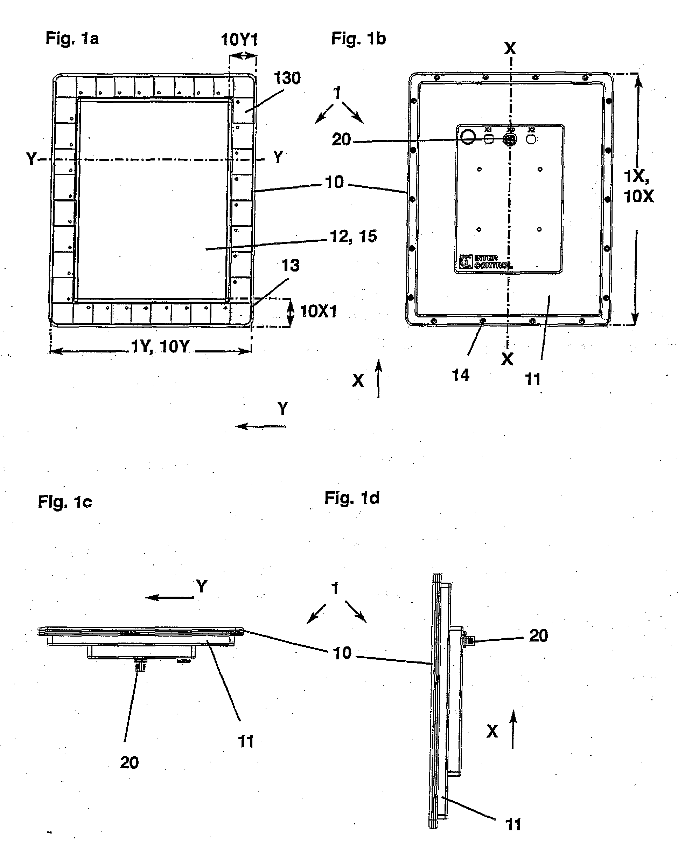

Fig. 1a zeigt eine schematische Darstellung einer Draufsicht auf eine erfindungsgemäße Anzeige- und Bedienvorrichtung 1, Fig. 1b zeigt die Anzeige-und Bedienvorrichtung von Fig. 1a von hinten, Fig. 1c zeigt die Anzeige- und Bedienvorrichtung von Fig. 1a von der Seite aus X - Richtung von Fig. 1, und Fig. 1d zeigt eine weitere Seitenansicht der Anzeige- und Bedienvorrichtung von Fig. 1a aus Y - Richtung von Fig. 1.

Eine erfindungsgemäße Anzeige- und Bedienvorrichtung 1 umfasst ein Gehäuse 11 mit den Abmessungen 1X und 1Y in X und Y-Richtung, in dem ein LCD-Display 15 angeordnet ist, das in einer Ebene X, Y angeordnet ist, wobei das Gehäuse 19 von einem oberen Rahmen 10 mit den Abmessungen 10X und 10Y in X und Y-Richtung abgedeckt ist und geeigneter Weise mit dem Gehäuse 11 mittels Befestigungsmittel, wie beispielsweise Schrauben 14 verbunden ist. Bei einer erfindungsgemäßen Anzeigte- und Bedienvorrichtung 1 haben das Gehäuse 11 und der Rahmen 10 in X - und Y - Richtung geeigneter Weise gleiche Abmessungen, während das Display 15, das Gehäuse 11 bzw. der Rahmen 10 und ein Touchscreen 12, der ebenfalls innerhalb dem Gehäuse 11 oberhalb des LCD-Displays 15 angeordnet sein kann, in X - und Y - Richtung unterschiedliche Abmessungen haben.

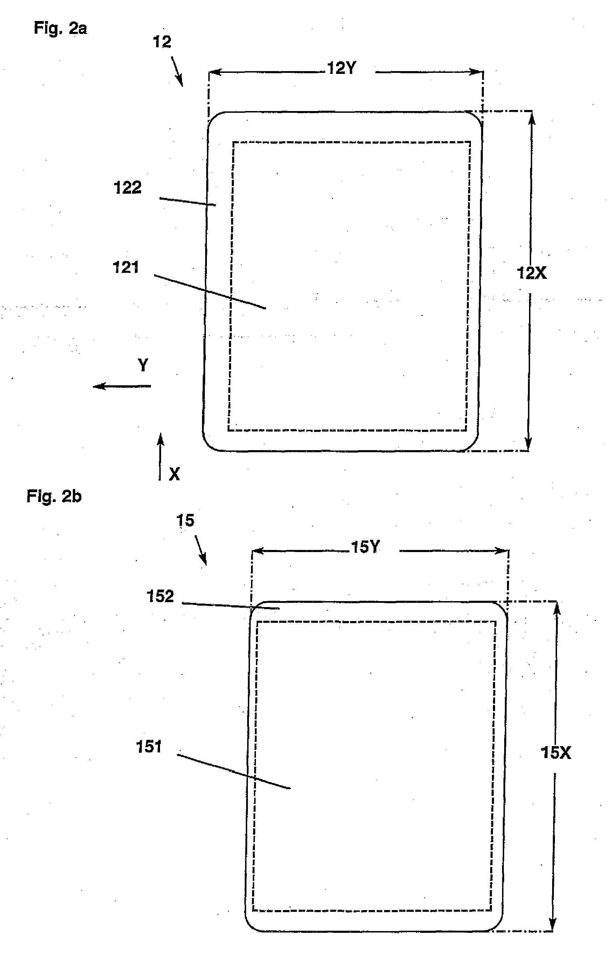

Insbesondere umfasst eine erfindungsgemäße Anzeige- und Bedienvorrichtung 1 vorteilhaft eine vorbestimmte Anzahl von Bedien- und/oder Steuertasten 130, die in einer geeigneter Ausnehmung des Rahmens 10 angeordnet sind und geeigneter Weise von einer Folie 13 abgedeckt sein können. Eine erfindungsgemäße Anzeige-und Bedienvorrichtung 1 ist außerdem vorteilhaft symmetrisch ausgebildet und umfasst ein LCD-Display 15 mit einer Active-Area 151, die von einem Randbereich 152 des LCD-Displays 15 umgeben ist, der jeweils zumindest in eine Richtung X, Y unterschiedliche Abmessungen hat, wobei das LCD-Display 15 außerdem in X, Y - Richtung die unterschiedlichen Abmessungen 15X und 15Y hat, wie der schematischen Darstellung von Fig. 2b entnommen werden kann.

Erfindungsgemäß ist der obere Rahmen 10 derart ausgebildet, dass er in X - Richtung und Y- Richtung jeweils identische Abmessungen 10X1, 10Y1 (Breite des Rahmens 10) hat, und außerdem das Gehäuse 11 und der Rahmen 10 derart ausgebildet und angeordnet, dass der Rahmen 10 den gesamten Randbereich 152 des LCD-Displays 15 abdeckt und außerdem das Gehäuse 11 abdeckt und außerdem die Active-Area 151 des Displays 15 innerhalb des Rahmens 10 erkennbar ist.

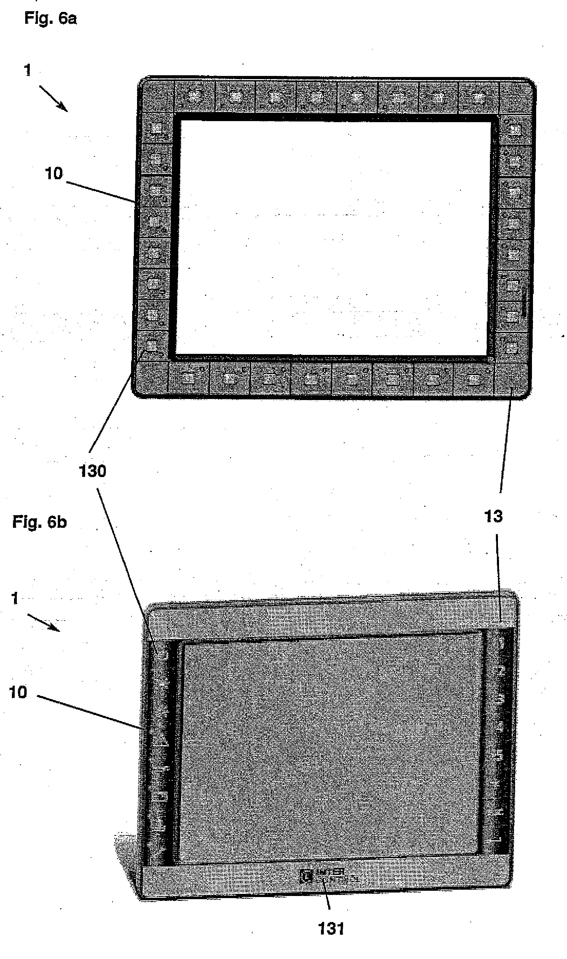

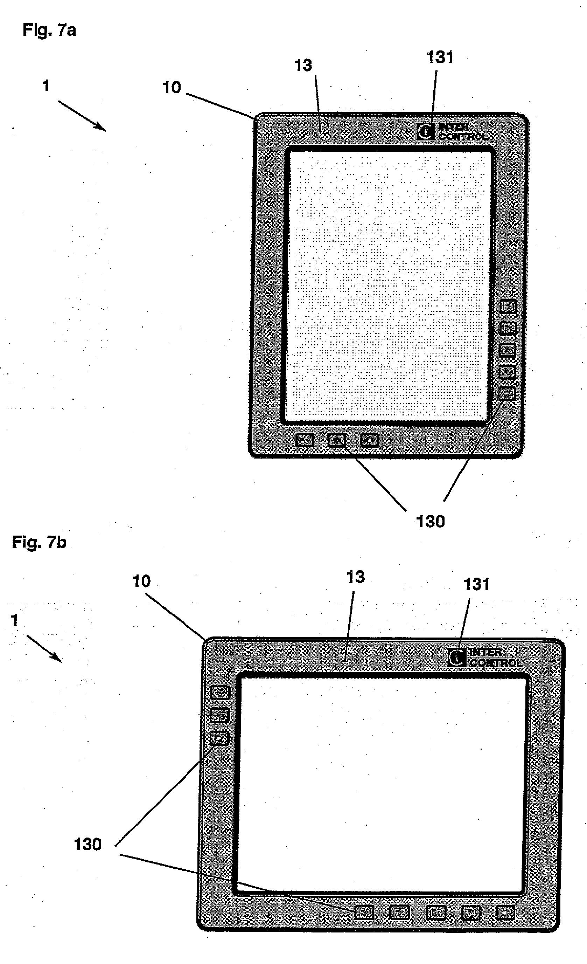

Außerdem ist eine erfindungsgemäße Anzeige- und Bedienvorrichtung 1 mit dem oberen Rahmen 10 mit der identischen Abmessung 10X1, 10Y1 (Breite des Rahmens 10) vorteilhaft derart ausgebildet, dass in dem Rahmen 10 Bedien-und/oder Steuertasten 130 flexibel und auf einfache Weise angeordnet werden können, was nachfolgend anhand der Figuren 6 und 7 detailliert erläutert wird. Für mobile Anwendungen können die Bedien- und/oder Steuertasten 130 vorteilhaft als taktile Steuertasten ausgebildet sein.

Außerdem sind die in dem Rahmen 10 vorgesehenen Bedien- und/oder Steuertasten 130 jeweils geeigneterweise von gleicher Bauart, so dass sie flexibel in dem Rahmen 10 vorgesehen und angeordnet werden können.

Eine erfindungsgemäße Anzeige- und Bedienvorrichtung 1 umfasst außerdem vorteilhaft einen Touchscreen 12 mit den Abmessungen 12X in X- Richtung und 12Y in Y- Richtung der oberhalb dem LCD-Display 15 angeordnet ist und ebenfalls von dem oberen Rahmen 10 abgedeckt ist, wobei der Touchscreen 12 außerdem eine Active-Area 121 umfasst, die von einem Randbereich 122 des Touchscreens 12 umgeben ist, der jeweils zumindest in einer Richtung X, Y unterschiedliche Abmessungen haben kann, was insbesondere der schematischen Darstellung von Fig. 2a entnommen werden kann. Erfindungsgemäß ist nun das Gehäuse 11 und der Rahmen 10 derart angeordnet und ausgebildet, dass der gesamte Randbereich 122 des Touchscreens 12 von dem Rahmen 10 abgedeckt ist und außerdem die Active-Area 121 des Touchscreens 12 innerhalb des Rahmens 10 bedienbar ist.

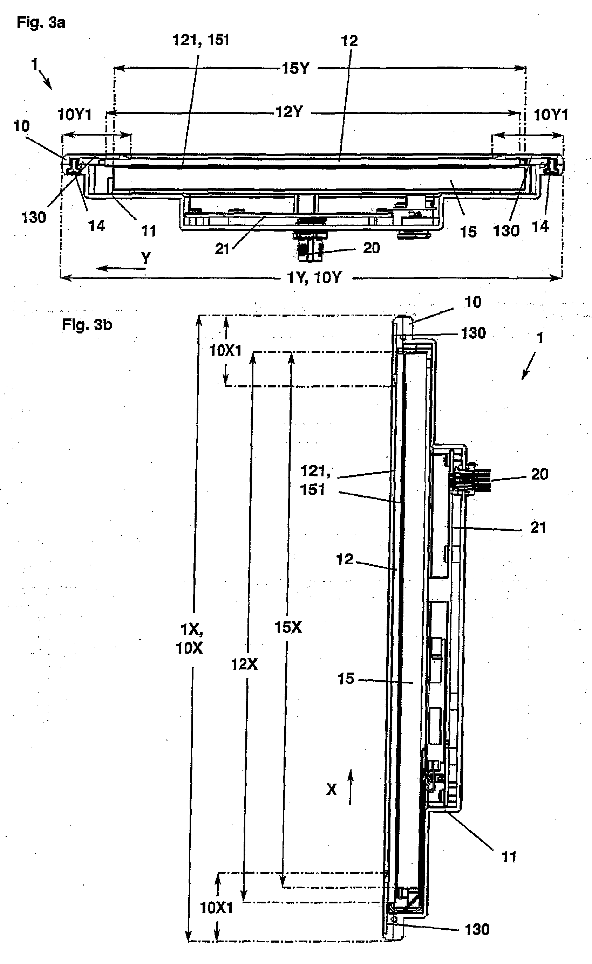

Eine erfindungsgemäße Anzeige- und Bedienvorrichtung 1 mit ihrem Gehäuse 11 und ihrem oberen Rahmen 10 ist insbesondere derart ausgebildet und angeordnet, dass sie einen Touchscreen 12 und ein LCD-Display 15 umfassen kann, deren jeweilige Abmessungen in X - und Y - Richtung, nämlich 12X und 12Y und 15X und 15Y unterschiedlich sind, und außerdem deren Randbereiche 122 und 152 ebenfalls in X- und Y - Richtung unterschiedlich ausgebildet sind, was nachfolgend anhand der Figuren 3, 4 und 5 näher erläutert wird.

Fig. 3a zeigt eine schematische Darstellung eines Schnittes durch die Anzeige- und Bedienvorrichtung 1 von Fig. 1a entlang der Linie Y-Y von Fig. 1a und Fig. 3b zeig eine schematische Darstellung eines Schnittes durch die Anzeige-und Bedienvorrichtung 1 von Fig. 1b entlang der Linie X-X von Fig. 1b, mit dem Gehäuse 1 dem Rahmen 10, jeweils mit den Abmessungen 1Y und 10Y in Y-Richtung und 1X und 10X in X- Richtung, wobei das LCD-Display 15 mit der Abmessung 15X und der Touchscreen 12 mit der Abmessung 12X in X - Richtung und jeweils mit der Abmessung 15Y und 12Y in Y - Richtung innerhalb des Gehäuses 1 angeordnet sind, und die Randbereiche 122 des Touchscreens 12 und die Randbereiche 152 des Displays 15 jeweils derart von dem Rahmen 10 abgedeckt sind, dass jeweils die Active-Area 121 des Touchscreens 12 innerhalb des Rahmens 10 bedienbar ist und außerdem die Active-Area 151 des Displays 15 innerhalb des Rahmens 10 erkennbar ist.

Es ist klar, dass eine erfindungsgemäße Anzeige- und Bedienvorrichtung 1 außerdem innerhalb ihres Gehäuses 11 eine geeignete Leiterplatte mit Steuerelementen zur Ansteuerung des Touchscreens 12, des Displays 15 und der Bedien- und/oder Steuertasten 130 umfasst.

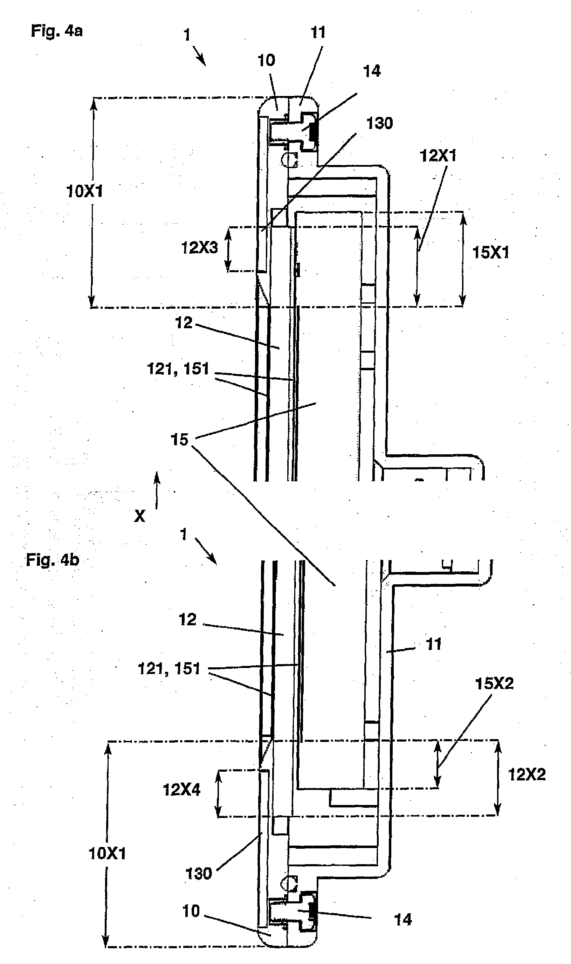

Fig. 4a zeigt eine vergrößerte Teilansicht der Anzeige- und Bedienvorrichtung von Fig. 3b und Fig. 4b zeigt eine weitere Vergrößerte Teilansicht der Anzeige- und Bedienvorrichtung 1 von Fig. 3b, wobei aus Fig. 4 die erfindungsgemäße Ausbildung und Anordnung von Gehäuse 11 und Rahmen 10 in X - Richtung und außerdem die erfindungsgemäße Anordnung von Display 15 und Touchscreen 12 innerhalb des Gehäuses 11 deutlich wird, wobei der Rahmen 10 jeweils den gesamten Randbereich 122 des Touchscreens 12 und den gesamten Randbereich 152 des LCD-Displays 15 in X- Richtung abdeckt, wobei jeweils die Beträge der Abdeckung in X - Richtung unterschiedlich sein können, nämlich 12X1 und 12X2 und 15X1 und 15X2.

Erfindungsgemäß kann hierbei außerdem der Rahmen 10 mit der Abdeckfolie 13, den Bedien- und/oder Steuertasten 130 und den Kennzeichnungen 131 derart angeordnet und ausgebildet sein und außerdem der Touchscreen 12 derart ausgebildet und in dem Gehäuse 11 angeordnet sein, dass die Abdeckfolie 13, die Bedien- und/oder Steuertasten 130 und die Kennzeichnungen 131 den Touchscreen in X-Richtung jeweils um einen ersten 12X3 und zweiten 12X4 Betrag abdecken, wobei sich diese Abdeckbeträge geeigneterweise unterscheiden können.

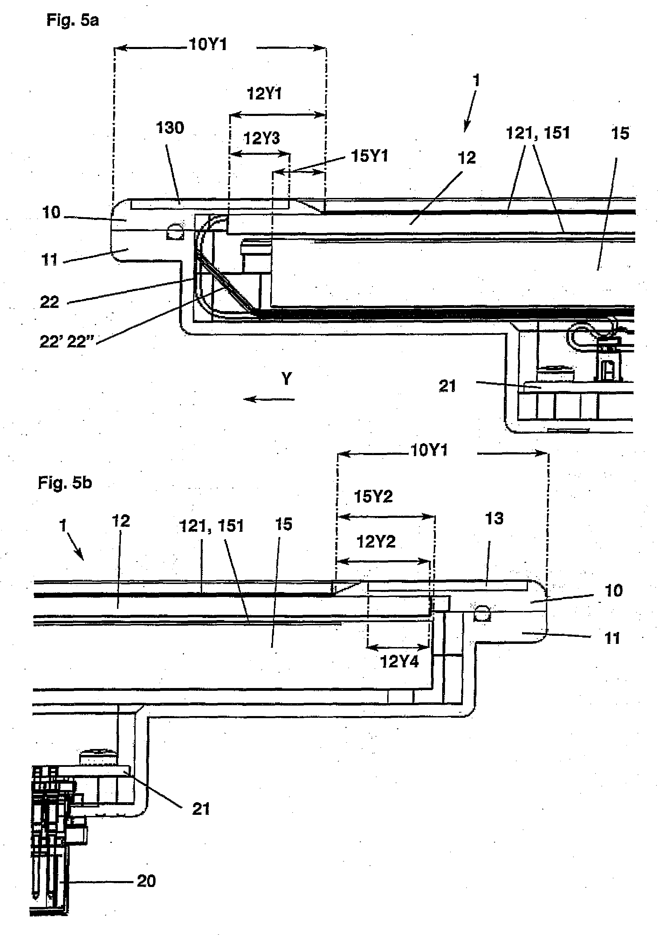

Fig. 5a zeigt eine vergrößerte Teilansicht der Anzeige- und Bedienvorrichtung von Fig. 3a und Fig. 5b zeigt eine weitere vergrößerte Teilansicht der Anzeige- und Bedienvorrichtung von Fig. 3a, aus der ebenfalls die erfindungsgemäße Ausbildung und Anordnung des Gehäuses 11 und des Rahmens 10 deutlich wird und außerdem die erfindungsgemäße Anordnung des LCD-Displays 15 und des Touchscreens 12 innerhalb des Gehäuses 11 erkennbar wird, wobei jeweils die vollständigen Randbereiche 152 und 122 des LCD-Displays 15 und des Touchscreens 12 von dem Rahmen 10 abgedeckt werden, und wobei sich die Beträge jeweils in Y-Richtung unterscheiden können, nämlich 15Y1 und 15Y2 für das Display 15 und 12Y1 und 12Y2 für den Touchscreen 12.

Erfindungsgemäß kann hierbei außerdem der Rahmen 10 mit der Abdeckfolie 13, den Bedien- und/oder Steuertasten 130 und den Kennzeichnungen 131 derart angeordnet und ausgebildet sein und außerdem der Touchscreen 12 derart ausgebildet und in dem Gehäuse 11 angeordnet sein, dass die Abdeckfolie 13, die Bedien- und/oder Steuertasten 130 und die Kennzeichnungen 131 den Touchscreen in Y-Richtung jeweils um einen ersten 12Y3 und zweiten 12Y4 Betrag abdecken, wobei sich diese Abdeckbeträge geeigneterweise unterscheiden können.

Außerdem ist eine erfindungsgemäße Anzeige- und Bedienvorrichtung 1 vorteilhaft derart ausgebildet, dass innerhalb des Gehäuses 11 und auch des Rahmens 10 hinreichend Platz für Leitungen 22, 22', 22" von der Leiterplatte 21 zu dem Display 15, dem Touchscreen 12 und den Bedien- und/oder Steuertasten 130 zur Verfügung steht.

Fig. 6a und b und 7a und b zeigen jeweils Draufsichten auf weitere Ausführungen einer erfindungsgemäßen Anzeige- und Bedienvorrichtung 1.

Bei der Anzeige- und Bedienvorrichtung 1 von Fig. 6a sind in dem gesamten zur Verfügung stehenden Bereich des Rahmens mit Ausnahme der Ecken Bedien-und/oder Steuertasten 130 gleicher Bauart angeordnet, wohingegen in Fig. 6b lediglich zwei gegenüberliegende Seiten des Rahmens 10 Bedien- und /oder Steuertasten 130 umfassen, während die beiden anderen gegenüberliegenden Seiten auf geeignete Weise abgedeckt sind und außerdem eine Kennzeichnung 131 umfassen können, die geeigneter Weise ein Logo 131 sein kann.

Fig. 7a und 7b zeigen weitere Abwandlungen der Ausführung der erfindungsgemäßen Anzeige- und Bedienvorrichtung 1 von Fig. 6b, mit in dem Rahmen 10 angeordneten Bedien- und/oder Steuertasten 130, die jeweils anders als bei der Ausführung von Fig. 6b nicht an gegenüberliegenden Seiten des Rahmens 10 angeordnet sind, sondern an aneinandergrenzenden Seiten des Rahmens 10 angeordnet sind, und wobei außerdem anders als bei der Ausführung von Fig. 6b jeweils nicht die gesamte zur Verfügung stehende Abmessung der jeweiligen Seite des Rahmens 10 mit Bedien- und/oder Steuertasten 130 bestückt ist.

Die verschiedenen Ausführungen der vorliegenden Erfindung von Fig. 7a und 7b unterscheiden sich dadurch, dass bei der Ausführung von Fig 7a die Anzeige- und Bedienvorrichtung 1 hochkant angeordnet ist während sie bei der Ausführung von Fig. 7b querliegend angeordnet ist.

Aus der vorstehenden Beschreibung der Ausführungen der vorliegenden Erfindung von Fig. 1, 6a, 6b, 7a und 7b zusammen mit den jeweiligen begleitenden Zeichnungen wird die vorteilhafte Funktion der symmetrischen geometrischen Ausbildung einer erfindungsgemäßen Anzeige- und Bedienvorrichtung 1 deutlich, nachdem hierdurch auf einfache Weise eine Vielzahl verschiedener Ausbildungen einer Anzeige- und Bedienvorrichtung 1 für unterschiedliche Anwendungen mit einer unterschiedlichen Anzahl von Bedien- und/oder Steuertasten 130 auch in vorbestimmten unterschiedlichen Anordnungen an dem Rand 10 auf modulare Weise flexibel bereitgestellt und angeordnet werden können, was außerdem bei der Herstellung vorteilhaft eine kundenspezifische Anpassung deutlich erleichtert bzw. beschleunigt und verbilligt.

Durch Berücksichtigung der maximal möglichen Anzahl der Bedien- und/oder Steuertasten 130 beim Layout einer geeigneter Tastaturfolie 13, die geeigneter Weise eine vorbestimmte Anzahl von. Bedien- und/oder Steuertasten 130 umfasst, können auf einfache Weise, schnell und kostengünstig kundenspezifische Varianten mit unterschiedlicher Tastenzahl und Tastenposition realisiert werden, da derartige Varianten durch eine modifizierte Bestückung/ Folienbedruckung generiert werden können. Außerdem kann hierdurch beispielsweise bei einem Wechsel auf einen anderen Touchscreen vorteilhaft das Frontdesign unverändert bleiben. Bei einer erfindungsgemäßen Anzeige- und Bedienvorrichtung 1 können daher mit sehr geringen Änderungen und/oder Pflegeaufwand verschiedene Touchscreen-Typen montiert werden, wobei die Gestaltung der Tastaturfolie 13 in dem Rahmen 10 in hohem Masse kundenspezifisch individualisiert bereitgestellt werden kann. Dies ermöglicht es schnell, flexibel und kostengünstig eine Vielzahl unterschiedlicher Gerätevarianten bereitzustellen.

Durch den symmetrischen Gehäuseaufbau mit den vorstehend genannten Abmessungen 1X und 1Y des Gehäuses 11 und 10X, 10Y, 10X1, 10Y1 des Rahmens 10 und mit der Vorsehung von Bedien- und/oder Steuertasten 130 gleicher Bauart ist außerdem auf einfache Weise eine Drehung der Anzeige- und Bedienvorrichtung 1 um +/- 90° möglich, ohne die restliche Mechanik verändern zu müssen, wobei auf diese Weise kostengünstig und schnell auf Kundenwünsche reagiert werden kann.

### Bezugszeichenliste

| | |
|---|---|
| Anzeige- und Bedienvorrichtung | 1 |
| Rahmen | 10 |
| Gehäuse | 11 |
| Touchscreen | 12 |
| Active-Area | 121 |
| Randbereich | 122 |
| Folie | 13 |
| Bedien- und/oder Steuertaste | 130 |
| Logo | 131 |
| Schraube | 14 |
| LCD-Display | 15 |
| Active-Area | 151 |
| Randbereich | 152 |
| | |
| Anschluß | 20 |
| | |
| Leiterplatte | 21 |
| | |
| Leitungen | 22, 22', 22" |
| | |
| Ebene | X,Y |
| | |
| Abmessung Gehäuse | |
| in Richtung X | 1X |
| in Richtung Y | 1Y |
| | |
| Abmessung Rahmen | |
| in Richtung X | 10X |
| In Richtung Y | 10Y |
| | |
| Breite Rahmen | |
| in Richtung X | 10X1 |
| in Richtung Y | 10Y1 |
| | |
| Abmessung Touchscreen | |
| in Richtung X | 12X |
| in Richtung Y | 12Y |
| | |
| Abmessung LCD-Display | |
| in Richtung X | 15X |
| in Richtung Y | 15Y |
| | |
| erste Abdeckung | |
| Touchscreen von 10 in | |
| Richtung X | 12X1 |
| | |
| zweite Abdeckung | 12X2 |
| Touchscreen von 10 in | |
| Richtung X | |
| | |
| erste Abdeckung | 15X1 |
| LCD-Display von 10 in | |
| Richtung X | |
| | |
| zweite Abdeckung | 15Y2 |
| LCD-Display von 10 in | |
| Richtung X | |
| | |
| erste Abdeckung | 12Y1 |
| Touchscreen von 10 in | |
| Richtung Y | |
| | |
| zweite Abdeckung | 12Y2 |
| Touchscreen von 10 in | |
| Richtung Y | |
| | |
| erste Abdeckung | 15Y1 |
| LCD-Display von 10 in | |
| Richtung Y | |
| | |
| Abdeckung | 15Y2 |
| LCD-Display von 10 in | |
| Richtung Y | |
| | |
| erste Abdeckung | |
| Touchscreen | |
| von 13/130/131 in | |
| Richtung X | 12X3 |
| zweite Abdeckung | |
| Touchscreen | |
| von 13/130/131 in | |
| Richtung X | 12X4 |
| | |
| erste Abdeckung | |
| Touchscreen | |
| von 13/130/131 in | |
| Richtung Y | 12Y3 |
| | |
| zweite Abdeckung | |
| Touchscreen | |
| von 13/130/131 in | |
| Richtung Y | 12Y4 |

## Patentansprüche

1. Anzeige- und Bedienvorrichtung (1), mit
einem Gehäuse (11), in dem ein LCD-Display (15) mit den Abmessungen (15X) in X - Richtung und (15Y) in Y - Richtung in einer Ebene (X, Y) angeordnet ist und mit einem oberen Rahmen (10) abgeschlossen ist, wobei:
das LCD-Display (15) umfasst eine Active-Area (151), die von einem Randbereich (152) des LCD-Displays (15) umgeben ist, der jeweils zumindest in einer Richtung (X, Y) unterschiedliche Abmessungen hat; und
der obere Rahmen (10) ist oberhalb des Displays (15) parallel zu der Ebene (X, Y) angeordnet und hat in X - Richtung und Y - Richtung jeweils eine identische Breite (10X1, 10Y1); und
das Gehäuse (11) und der Rahmen (10) sind derart ausgebildet, dass der Rahmen (10) den gesamten Randbereich (152) des LCD-Displays (15) abdeckt und außerdem das Gehäuse (11) abdeckt, und außerdem die Active-Area (151) des Displays (15) innerhalb des Rahmens (10) erkennbar ist, wobei
in dem Rahmen (10) eine vorbestimmte Anzahl taktile Bedien- und/oder Steuertasten (130) und/oder Kennzeichnungen (131) und/oder eine Abdeckfolie (13) angeordnet sind, wobei zumindest die Bedien- und/oder Steuertasten (130) und die Abdeckfolie (13) jeweils in X und/oder Y - Richtung die gleiche Abmessung haben.

2. Anzeige- und Bedienvorrichtung (1), nach Anspruch 1, außerdem mit einem Touchscreen (12), mit den Abmessungen (12X) in X - Richtung und (12Y) in Y- Richtung, der oberhalb dem LCD-Display (15) angeordnet ist und ebenfalls von dem oberen Rahmen (10) abgedeckt ist, wobei:
der Touchscreen (12) umfasst eine Active-Area (121), die von einem Randbereich (122) des Touchscreens (12) umgeben ist, der jeweils zumindest in einer Richtung (X, Y) unterschiedliche Abmessungen hat; und
der Touchscreen (12) ist derart in dem Gehäuse (11) oberhalb des LCD-Displays (15) angeordnet, dass der Rahmen (10) den gesamten Randbereich (122) des Touchscreens (12) abdeckt, und außerdem die Active-Area (121) des Touchscreens (12) innerhalb des Rahmens (10) bedienbar ist.

3. Anzeige- und Bedienvorrichtung (1) nach Anspruch 2, wobei:
das LCD-Display (15) und der Touchscreen (12) haben unterschiedliche Abmessungen (15X, 15Y) und (12X, 12Y).

4. Anzeige- und Bedienvorrichtung (1) nach Anspruch 2, wobei:
die unterschiedlichen Abmessungen des Randbereiches (152) des LCD-Displays (15) in wenigstens einer Richtung (X, Y) und die unterschiedlichen Abmessungen des Randbereiches (122) des Touchscreens (12) in wenigstens einer Richtung (X, Y) sind verschieden.

5. Anzeige- und Bedienvorrichtung (1) nach einem der Ansprüche 1 bis 5 wobei:
das Gehäuse (11) und der Rahmen (10) sind derart ausgebildet, und
das LCD-Display (15) ist derart in dem Gehäuse (11) angeordnet, dass der Rahmen (10) das LCD-Display (15) in X - Richtung jeweils um einen ersten (15X1) und zweiten (15X2) Betrag abdeckt, und in Y - Richtung jeweils um einen ersten (15Y1) und zweiten (15Y2) Betrag abdeckt.

6. Anzeige- und Bedienvorrichtung (1) nach Anspruch 5, wobei:
wenigstens einer der ersten (15X1) und zweiten (15X2) Abdeckbeträge in X - Richtung und/oder der ersten (15Y1) und zweiten (15Y2) Abdeckbeträge in Y - Richtung unterscheiden sich.

7. Anzeige- und Bedienvorrichtung (1) nach einem der Ansprüche 2 bis 6, wobei:
das Gehäuse (11) und der Rahmen (10) sind derart ausgebildet, und
der Touchscreen (12) ist derart in dem Gehäuse (11) angeordnet, dass der Rahmen (10) den Touchscreen (12) in X - Richtung jeweils um einen ersten (12X1) und zweiten (12X2) Betrag abdeckt, und in Y- Richtung jeweils um einen ersten (12Y1) und zweiten (12Y2) Betrag abdeckt.

8. Anzeige- und Bedienvorrichtung (1) nach Anspruch 7, wobei
wenigstens einer der ersten (12X1) und zweiten (12X2) Abdeckbeträge in X - Richtung und/oder wenigstens einer der ersten (12Y1) und zweiten (12Y2) Abdeckbeträge in Y- Richtung unterscheiden sich.

9. Anzeige- und Bedienvorrichtung (1) nach einem der Ansprüche 1 bis 8, wobei:
die Bedien- und/oder Steuertasten (130) und/oder Kennzeichnungen (131) und/oder die Abdeckfolie (13) decken den Touchscreen (12) in X-Richtung jeweils um einen ersten (12X3) und zweiten (12X4) und in Y-Richtung jeweils um einen ersten (12Y3) und zweiten (12Y4) Betrag ab.

10. Anzeige- und Bedienvorrichtung nach Anspruch 9, wobei:
wenigstens einer der ersten (12X3) und zweiten (12X4) Abdeckbeträge in X-Richtung und ersten (12Y3) und zweiten (12Y4) Abdeckbeträge in Y-Richtung unterscheiden sich.

11. Anzeige- und Bedienvorrichtung (1) nach einem der Ansprüche 2 bis 10, wobei:
die Abmessung (15X, 15Y) des Displays (15) und die Abmessung (12X, 12Y) des Touchscreens unterscheiden sich.

12. Anzeige- und Bedienvorrichtung (1) nach einem der Ansprüche 2 bis 11, wobei:
das Gehäuse (11) und der Rahmen (10) sind derart ausgebildet, dass hinreichend Platz innerhalb des Gehäuses (11) für Anschlüsse von Leitungen (22, 22', 22") von der Leiterplatte (21) mit Steuerelementen zu dem LCD- Display (15) und/oder dem Touchscreen (12) vorhanden ist, ohne dass die symmetrische Bauweise des Rahmens (10) beeinträchtigt ist.

13. Anzeige- und Bedienvorrichtung (1) nach einem der Ansprüche 1 bis 12, wobei:
das Display (1) ist derart ausgebildet, dass es drahtlos und insbesondere über WLAN ansteuerbar ist und/oder Signale übermitteln kann.
